Europäisches Patentamt

European Patent Office

Office européen des brevets

(11) Publication number: **0 365 745**
**A2**

## EUROPEAN PATENT APPLICATION

(21) Application number: **89111278.1**

(22) Date of filing: **21.06.89**

(51) Int. Cl.5: **G06F 15/16**

(30) Priority: **28.10.88 US 264461**

(43) Date of publication of application:
**02.05.90 Bulletin 90/18**

(84) Designated Contracting States:
**DE FR GB**

(71) Applicant: **International Business Machines Corporation**
**Old Orchard Road**
**Armonk, N.Y. 10504(US)**

(72) Inventor: **Rathi, Bharat Deep**
**167-C Route 8 Lakeview Drive**
**Mahopac New York 10541(US)**

(74) Representative: **Jost, Ottokarl, Dipl.-Ing.**
**IBM Deutschland GmbH Intellectual Property**
**Dept. Schönaicher Strasse 220**
**D-7030 Böblingen(DE)**

(54) **A method for detecting and avoiding erroneous decombining in combining networks for parallel computing systems.**

(57) A method to detect and avoid erroneous message decombining in the switching nodes of message combining multistage interconnection networks used to connect the multiple processors to the multiple memory modules of the shared memories used in parallel computing systems. The method assigns a unique ID to each switch and tags each combined message with it. This ID is also tagged to the reply messages. During decombining the message's ID is matched with the switch's ID, if they do not match the message is not decombined. According to a further feature of the invention, it is possible to provide sufficient information in the ID field to allow a routing error to be detected.

FIG. 5

# A METHOD FOR DETECTING AND AVOIDING ERRONEOUS DECOMBINING IN COMBINING NETWORKS FOR PARALLEL COMPUTING SYSTEMS

The present invention relates to data processor storage systems and, more particularly, to such storage system controls for use in a large multiprocessor computer system having a plurality of processors and a plurality of individual memory modules. Still more particularly, it relates to the architecture of the Interconnection Network which implements and controls data flow between individual processors and memory modules in such systems.

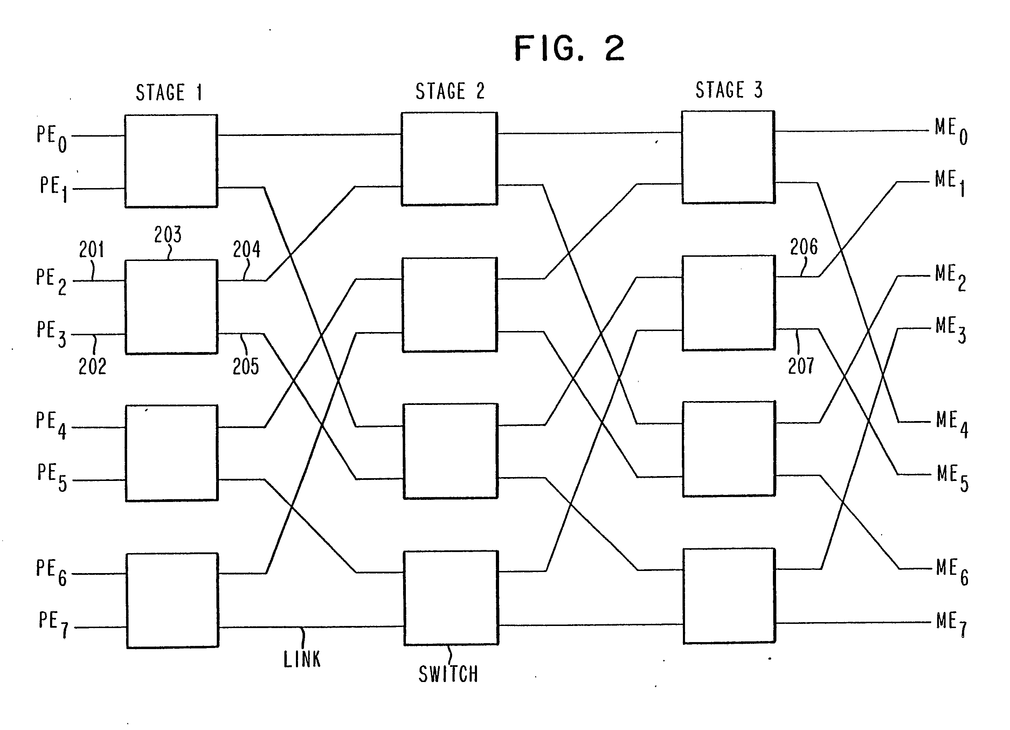

Recent studies (1 and 4) have shown that the memory systems of large parallel computers can potentially suffer from a performance-crippling defect. If a significant fraction of memory references are addressed to one memory address, the performance of the whole system can be limited by the capacity of that one memory. If access to that memory is via a Multistage Interconnection Network (MIN) (see FIG. 2), a phenomenon known as "tree blockage" will result in additional contention, causing substantial delays to all users of that system.

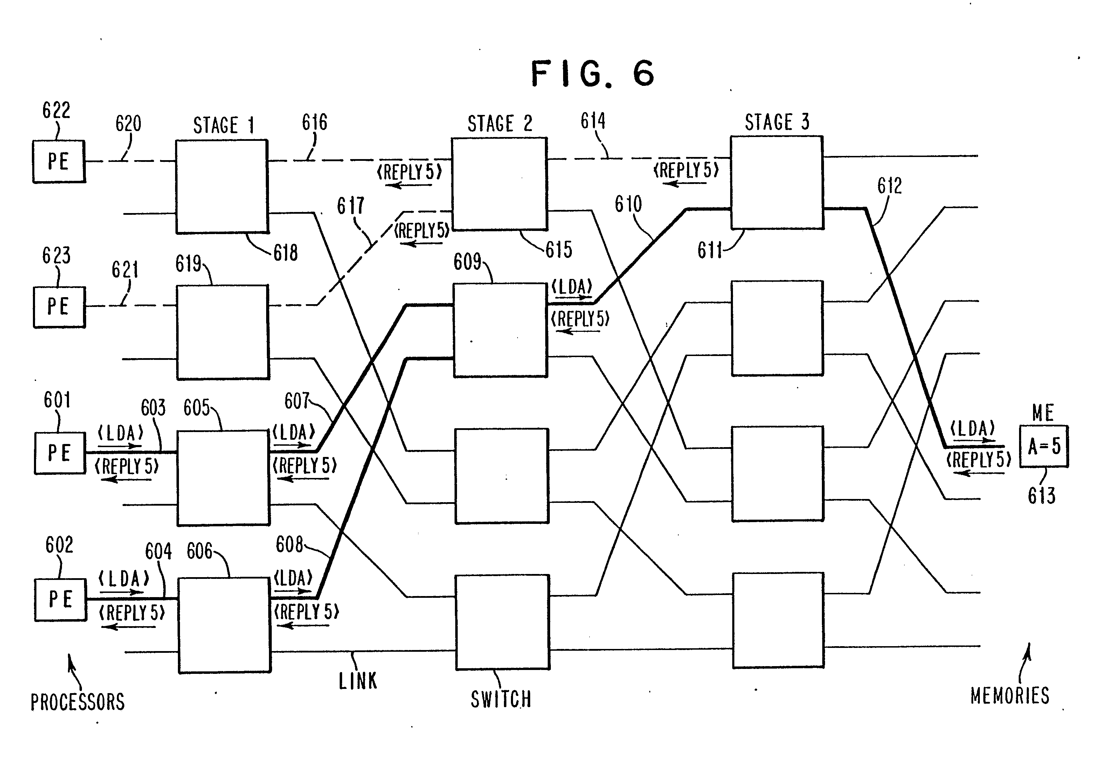

One solution to this problem is a Combining MIN (4, 6 and 8). The combining network causes references to the memory "hot spot" to be combined enroute to memory, reducing the contention for the hot spot. A graphical example of combining and decombining is shown in FIG. 6.

This combining can take place at any switch in any stage of the network. But in order to decombine correctly, the reply from the memory must decombine at the switch that generated the combined message. An error should be reported if the message attempts to decombine at any other switch. Such erroneous decombines must be avoided for proper system performance. As will be well understood, a combined packet can combine again. In fact one can design the combining network switch to combine more than two packets for the same address.

To avoid performance degradation due to hot spots, a combining network has been proposed and designed for the RP3 experimental computer (1). In the RP3 combining network design, each "combined" message is tagged with the number of the stage at which it combined. This tagging is done by the switch that does the combining. The resulting reply message from the memory is also tagged with this stage number (i.e. the stage number in the request message). This is done by the memory. In order to decombine a message at the correct stage, each switch first compares it's stage number to this tag. If a match takes place, then the switch decombines the message, otherwise it just routes the message to the next stage. It is assumed that the routing method used by the network guarantees (if the network is fault free) that the messages to and from the memory are routed through the same switches of the network. The routing scheme used by RP3 guarantees this.

For example, in Fig. 6 two messages get combined at switch 609 in stage2. Therefore, the switch 609 tags the resulting combined message with "TAG = 2". The memory 613 attaches this tag to its reply message. This reply message passes through switches 611, 609, 606 and 605 in stages 3, 2 and 1 respectively of the network. But only the switch 609 in stage-2 decombines the message because its stage number matches the reply messages's tag (i.e. TAG = 2). Therefore the decombining should be done by the switch that did the combining.

This scheme works well if it is assumed that no faults exist in the combining network. But this method does not work if it is possible to have faults that either: (1) corrupt the tag field of a combined or reply message before it is decombined; and/or (2) incorrectly route a message, at any stage of the network, before it is decombined. In the first case an erroneous decombine takes place because the message decombines at the stage that matches the corrupted tag. This stage is not the stage at which the message combined. In the second case an erroneous decombine takes place because the message is decombined at a switch that did not combine the message, although the switch is in the correct stage. For example, in FIG. 6 if due to an error switch 611 routes the reply message to switch 615, then switch 615 can erroneously decombine this message. The resulting messages will then be routed incorrectly to switches 618 and 619 and onwards to PEs attached to them 622 and 623.

Errors due to corrupted tags can be detected if error detection codes and circuitry are used. For example, in a combining network if a byte of a message can have only single (or odd) bit errors, then parity can be used for each byte (e.g. RP3 Combining Network). To detect errors the switches of this network will need to have the necessary parity generating and checking logic. The only caution here is that as the message is routed through the network, the parity generation circuitry of the switches should not mask errors. That is if a byte is received in error, then the switch should transmit this byte with the parity set to indicate an error. If this is not done, then masking of errors can result in erroneous decombining.

Errors due to incorrect routing can occur when the routing tag is in error and/or when the switch's control circuitry is faulty. Routing errors due to routing tag errors can also be detected by error detecting codes (if used). But incorrect routing errors due to control circuitry errors cannot be detected by error detecting codes. This is because these codes do not detect errors in the control circuitry of the switch. They can detect errors only in the data. Therefore, if a switch's routing control circuitry has a fault (transient or permanent), a message can be incorrectly routed without any of its data words being corrupted. In such cases the error will not be detected by the network and the message will decombine erroneously.

In the above discussion and in the following description of the present invention it is assumed that the error detecting code can detect all possible routing tag errors. If it cannot do so, then incorrect routing can take place sometimes. For example, in the RP3 Combining Network one bit of odd parity is assigned to a byte of a message. Therefore all single (or odd) bit errors can be detected in the message. But double (or even) bit errors cannot be detected. If the routing tag has a double (or even) bit error, then the message can be routed incorrectly and this error will not be detected by the switch.

Therefore, it is apparent that the RP3 combining network switch design cannot always detect and avoid erroneous decombining due to incorrect routing of messages. It is important to avoid such errors because they can result in incorrect computing. Further, it is important to detect and avoid such errors because both the user applications and the operating system are expected to use the Combining Network (e.g. RP3). Erroneous decombines can have crippling effects on the operating system and multi-user parallel processor systems.

European Patent Application 89 105 326.6 entitled "A Hardware Mechanism For Automatically Detecting Hot-Spot References And Diverting Same From Memory Traffic In A Multiprocessor Computer System" discloses an alternative way to help reduce memory blockages. Instead of combining and decombining messages in a single multistage interconnection network as with the present invention, the above application utilized two separate networks, one for low latency and one other capable of handling high contention traffic, and diverts those messages which are detected "hotspots" over the second network. The system also provides means for detecting and removing hotspots on a dynamic basis to efficiently control the message routing function.

The following four articles generally describe the attributes of the previously referenced experimental high-speed multiprocessor computing system known as the RP3 having a large shared memory. All four of these articles appear in the Proceedings of 1985 International Conference on Parallel Processing, August 20-23, 1985.

1. Pfister, G.F.; Brantley, W.C.; George, D.A.,; Harvey, S.L.; Kleinfelder, W.J.; McAuliffe, K.P.; Melton, E.A.; Norton, V.A.; and Weiss, J. "The IBM Research Parallel Processor Prototype (RP3): Introduction and Architecture," pp. 764-771. This article is tutorial in nature and describes an overall multiprocessor system in which the present invention has particular utility.

2. Norton, V.A. and Pfister, G.F. "A Methodology for Predicting Multiprocessor Performance," pp. 772-781. This article is also tutorial in nature and describes methods which attempt to predict a given multiprocessor performance and indicates some of the considerations used in predicting various types of memory blockages, etc., which can occur to seriously detract from the overall system performance. It is noted that these general concepts for evaluation and monitoring were instrumental in recognizing the need for the present invention.

3. McAuliffe, K.P.; Brantley, W.C.; and Weiss, J. "The RP3 Processor/Memory Element," pp. 782-789. This article describes a memory element for such a system and broadly describes some of the memory design considerations which affect overall memory performance, and is relevant to the present invention in that it is background information for the memory design of a large multiprocessor system.

4. Pfister, G.F. and Norton, V.A. "Hot-Spot Contention and Combining in Multistage Interconnection Networks," pp. 790-797. This article generally discusses the problems and interconnection network for a large multiprocessor system such as the RP3 and suggests the use of two separate interconnection networks over which memory references may be selectively sent to at least alleviate the Hot-Spot problem.

The following four papers/notes comprise public domain articles discussing combining networks and combining switch designs. Their relevancy is discussed generally below and specifically in the body of the specification.

5. Gottleib, A., et al, "The NYU Ultracomputer --Designing a MIMD, Shared Memory Parallel Machine", IEEE TC, February 1983, pages 175-189.
This paper is a high level description of the NYU Ultra-Computer. It also generally discusses the use of combining messages in such a multiprocessor system.

6. Susan Dickey, Richard Kenner, Marc Snir and John Solworth, "A VLSI Combining Network for the NYU Ultracomputer", Proceedings of the International Conference on Computer Design, 1985.

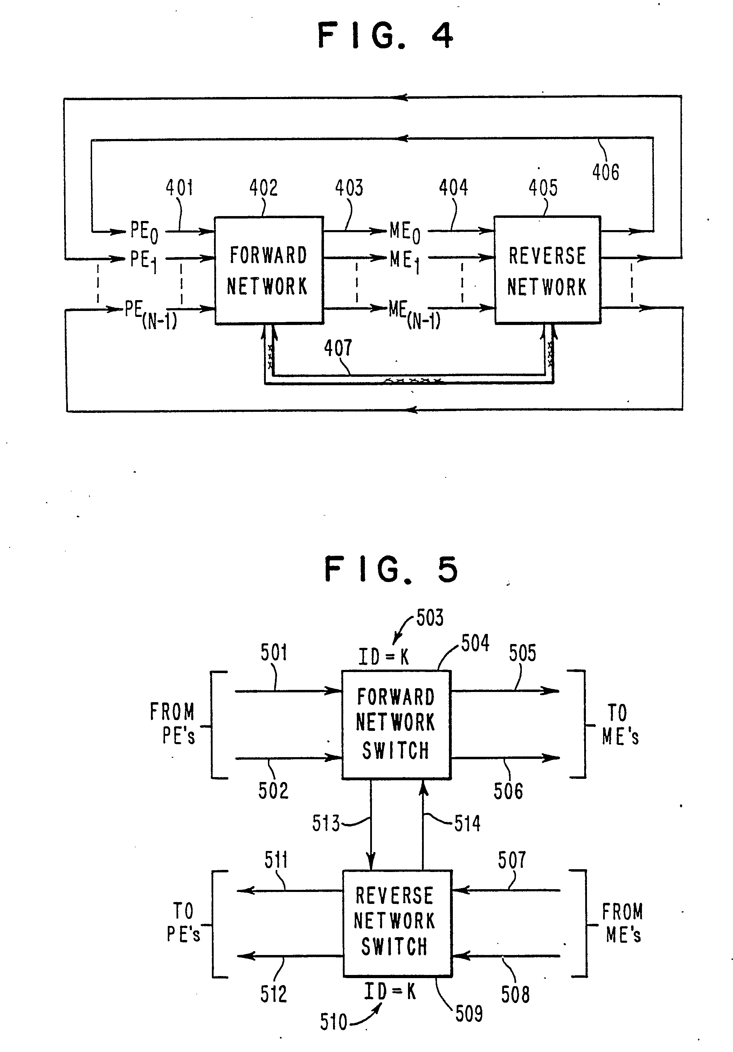

This paper describes the routing scheme and link protocols for a combining network (i.e. FIG. 5). It also describes a VLSI implementation of a combining switch. This VLSI implementation description also indicates the type of information that needs to be maintained with the switch and also information that the forward and reverse path switches exchange.

7. Susan Dickey and Richard Kenner, "Specification for a Combining-Switch", New York University, Note of November 18, 1986. Published Note available from NYU Ultra-Computer Project.
This paper specifies message formats for a design of a combining switch, the combinable operations supported and the use of the switch level in the packet format to indicate the decombining switch. In the present embodiment this switch level is referred to as the stage number. The present invention is a significant improvement over a scheme that uses only a stage number (switch level), to indicate which switch should decombine a combined message.

8. Yarsun Hsu, Wally Kleinfelder and C. J. Tan, "Design of a Combining Network for the RP3 Project", 1987 International Symposium on VLSI Technology, (Systems and Applications), May 13-15, 1987.
This paper describes a design for a combining network switch. It describes the combining switch structure for the forward and reverse paths, a routing scheme used by the network, message formats (i.e. FIG. 5) forward and reverse path packets, and various combinable operations.

The following four patents were found pursuant to a USPTO prior art search and are deemed to be the closest references found although they are not overly relevant to the present invention as will be apparent from the following discussion.

U.S. Patent No. 4,081,612 relates to a method for the building-up of a routing address, consisting of routing words that are associated with the switching nodes of a digital telecommunication network. This method suggests that the routing address be generated by compounding the address field with the address of each segment of the routing path.

The significant difference between this and the present invention is: (1) the application domain of the present invention is not telecommunications, but parallel processing systems (computing systems); and (2) the present invention is not directed to routing address generation but to a method to avoid erroneous decombining in combining networks, which can be used in information/computing systems.

U.S. Patent No. 4,569,041 discloses a network for building a circuit/packet switching loop network, that can compose and route composite packets.

The present invention is significantly different in that it discloses a technique to be used in multistage interconnection networks. Also the present invention does not consider routing packets in a circuit switched environment.

U.S. Patent No. 4,577,311 relates to a packet based telecommunication system wherein each packet has, inserted in an address field, a sequence of addresses assigned to the successive switching networks included in a route from a packet sender station to a packet receiver station.

The significant difference between this and the present invention is: (1) the application domain is not telecommunications, but parallel processing systems (computing systems); and (2) the present invention is not directed to routing address generation, but to a method for avoiding erroneous decombining in combining networks, which can be used in information/computing systems.

U.S. Patent No. 4,168,400 discloses a checking device and an eliminating and switching device for eliminating packets having erroneous address and data fields. The patent uses an error detection code to detect errors in the address field and another error detection code to detect errors in the data field of a packet. These error detection codes help detect errors that may be introduced in these fields while the packet is being transmitted from one node of the network to another.

The present invention does not preclude the use of such error detection codes to detect errors in these fields, that may have been introduced during transmission of the packet. It should be noted that these codes only help detect errors that are introduced by the data path of the circuitry (i.e. the circuitry and lines used to transmit the bits of the address, data and these error code fields). These codes cannot detect errors that are generated by the control circuitry of the node (e.g. incorrect routing of a packet, once a node has received it without error). The present invention discloses methods for detecting such control circuitry errors for combining networks. Detecting such control circuitry errors is important for the correct operation of computing systems using combining networks and goes beyond conventional error detection/correction.

The following is a list of references found pursuant to the aforementioned prior art search which generally constitute background art, but are not deemed sufficiently relevant to warrant specific discussion.
U.S. Patent 4,413,318 (IBM)
U.S. Patent 4,207,609 (IBM)
U.S. Patent 4,354,263
U.S. Patent 4,153,932

It is a primary object of the present invention to provide an improved multistage interconnection network architecture for use in a large shared memory multiprocessing system.

It is a further object to provide such an architecture which improves network efficiency by reducing "blockages".

It is another object of the invention to provide such an architecture which improves the reliability of such networks having the ability to combine and decombine messages.

It is yet another object of the invention to provide such an interconnection network in conjunction with a Combining/Decombining feature which detects and avoids erroneous "decombines" of messages.

It is a further object of the invention to provide such a network architecture which utilizes additional data in the message header together with error detection circuitry in the network to detect and thus avoid erroneous message decombinations in the switching network.

The objects, features and advantages of the present invention are accomplished by an improved method for handling message Combining/Decombining in a multistage interconnection network which comprises assigning a unique identification number to every switch in the network that whenever a message requires combining at a particular switch node the unique ID of the combining switch node is attached to the message in the message header. When the memory generates a response to this message, the memory copies this ID into the response message's header. When the message is returned to the interconnection network by a memory element for potential decombining, this ID in the header is compared with the ID of each receiving switch node. If the IDs match, then decombining is done by the switch. If the IDs do not match, then decombining is not done by that switch. This way erroneous decombining is avoided. An error is detected when a processor does not see a zero ID (i.e. the NOC ID) in any message it receives from the combining network. A non-zero ID at a processor indicates that decombining was not done. This is an error.

According to a first aspect of the invention a single, unique switch ID is utilized in the system which will clearly indicate an erroneous attempted decombination and, according to a further embodiment of the invention, both a switch level ID as well as an in dividual switch ID are concatenated in the header to give a more sophisticated form of error detection for subsequent diagnostic use by the system control in the sense that it provides more information to the system when an error is detected. In the second embodiment a combining switch is able to detect the error and possibly take remedial action whereas in the first embodiment only the processor can detect the error and take appropriate action.

FIG. 1 comprises a high level functional block diagram illustrating the typical organization of a large parallel processor system.

FIG. 2 comprises a functional block diagram illustrating a typical multistage interconnection network (MIN) as would be utilized in the parallel processor system illustrated in FIG. 1.

FIG. 3 comprises an example (using the network of FIG. 2) illustrating a communication path between a particular processor and a particular memory element of such a parallel processor system in the interconnection network.

FIG. 4 comprises a high level functional diagram illustrating the overall organization and flow path of a combining network.

FIG. 5 comprises a functional diagram illustrating a particular switch as would be utilized in the combining network shown in FIG. 4.

FIG. 6 comprises a diagram illustrating a message combining and a subsequent decombining operation in the overall MIN of FIG. 4 and also illustrating an erroneous decombining operation.

FIG. 7 comprises a diagram illustrating the overall structure and content of a network message.

FIG. 8 comprises a diagram illustrating the structure and content of the Header field of the message of FIG. 7.

FIG. 9 comprises a flow chart of the operations which must be performed in the forward direction at each switch node in a combining network incorporating the features of the present invention.

FIG. 10 comprises a flow chart of the operations which must be performed in the reverse direction at each switch node in such a combining network when returning messages from a memory element to a requesting processor in accordance with the teachings of the present invention.

FIG. 11 comprises the switching network of FIG. 2 without showing the specific interconnections, illustrate a first tagging method for accomplishing the objectives of the present invention.

FIG. 12 is a figure similar to FIG. 11 illustrating a second tagging method for accomplishing the objectives of the present invention.

Two closely related methods for preventing erroneous decombining, in accordance with the teachings of the present invention will be described. Some overall assumptions and a high level overview of the invention will first be described followed by a detailed description of the above two methods.

It is assumed here that some method exists by which a switch in a Combining Network can inform the host system that an error was detected while decombining a message. The exact method used is not relevant to this invention. One way this can be done is by setting an error indicting bit/field in the message (assuming such a field is provided). Then the processors can test this bit/field in every decombined message they receive. If it is set, the processor can initiate the necessary actions (such as retry, interrupt, etc.). It is also assumed that error detecting codes and appropriate error detecting hardware are used to detect errors in the message words.

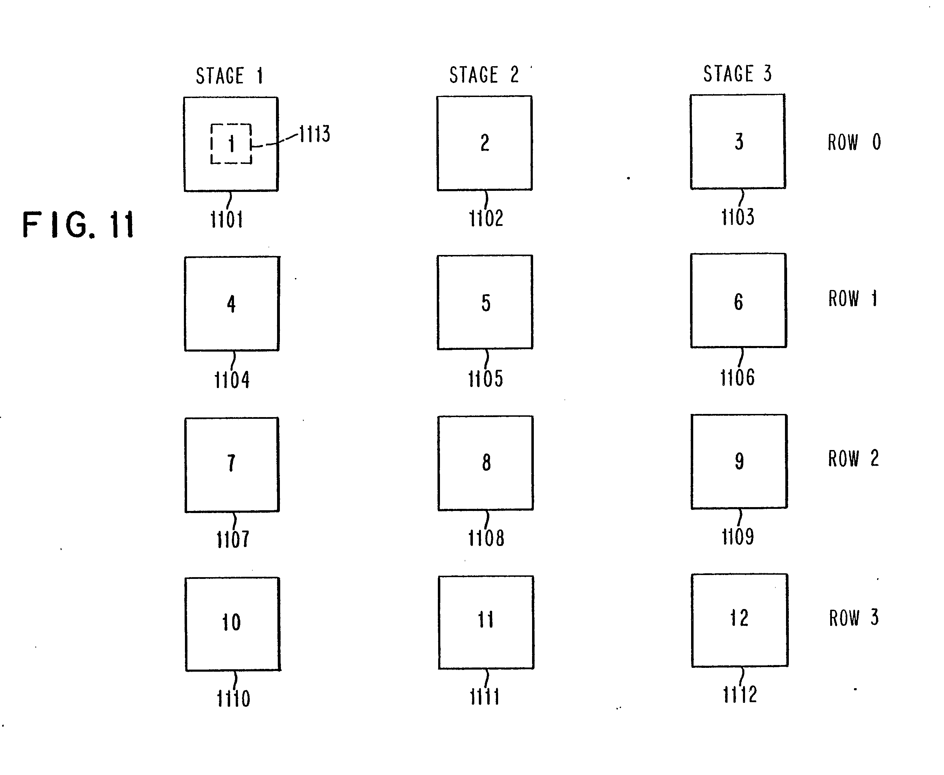

According to the first method, each switch in the Combining network is assigned a unique identification number (ID). This ID is unique with respect to the other switches of the network. For example, if there are 12 switches in a Combining Network, then the switches can be assigned numbers from 1 through 12 (see FIG. 11). The number 0 can be reserved to indicate that combining did not take place. It is of course required that each switch be informed of its ID at network initialization time. Whenever a switch combines messages, the resulting combined message is tagged with this switch's ID. The combined message must, of course, be provided with a field in which this ID can be written. When the memory services a combined message, it also tags the reply message with this same ID. As this reply message is routed back, each switch compares its ID with the ID in the message. A switch decombines the message only if these IDs are the same. If they do not match, the message is routed onto the next stage. It is thus apparent that an erroneous decombine cannot take place because each switch has a unique ID.

It should be noted that the method presented only avoids erroneous decombining from taking place. It does not detect an error. This is because in this method a switch cannot not tell if a message should have also been decombined at some other switch, before it reached it (the switch). In order to detect such errors the second method can be used.

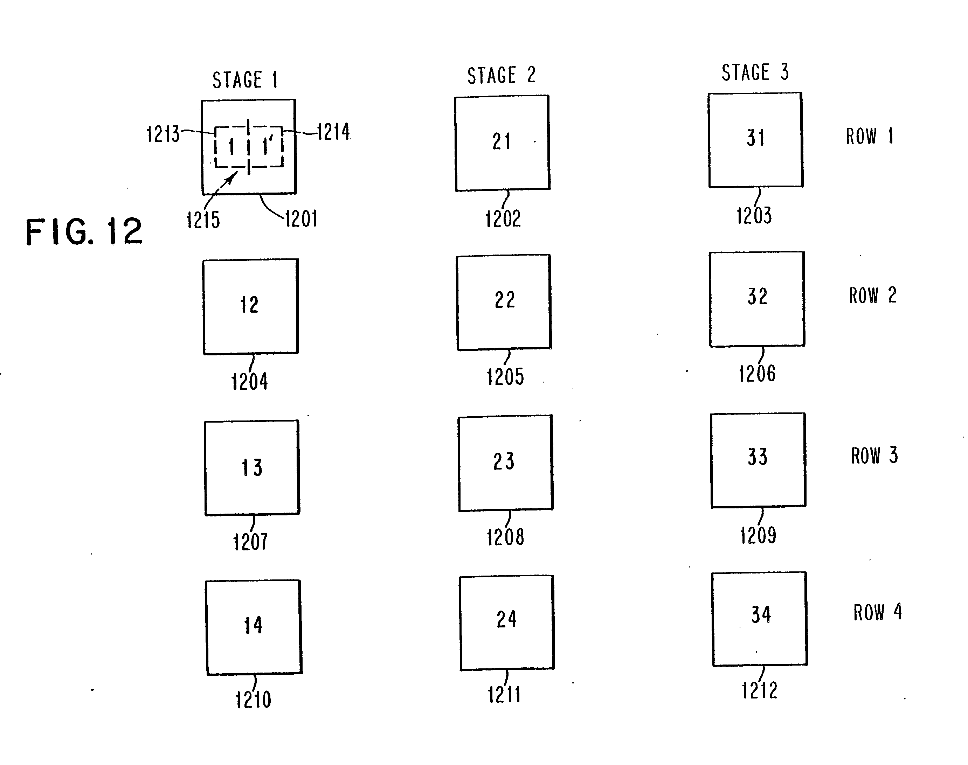

According to the second method the switch's ID is constructed by concatenating two fields 1213 and 1214 (see FIG. 12). The first field 1213 indicates the stage in which the switch resides, while the second field 1214 gives the unique number of the switch within that stage (i.e. its row number). For example if there are "L" stages of switches in the network and "N" switches per stage. Then each stage can be assigned a unique number from 1 through "L" and each switch in a stage can be assigned a unique number from 1 through "N". The stage number 0 and switch number 0 can be used to indicate that a message did not combine (NOC). The switch ID can be constructed by concatenating the bit representation of these two numbers.

When the second method is used, the switches decombine a message only if their ID matches the message's ID. That is both the fields of both the IDs should match. If either of these fields do not match, then the message is not decombined and is routed to the next stage. But if the stage number fields match and the switch number fields do not match, then it is flagged as an error. This is because this mismatch indicates that the reply message is at the correct stage, but at the wrong switch. Since these Combining Networks do not have interconnections between the switches of a stage, this message can never be decombined. Therefore, an incorrect routing error has taken place. Thus it may be seen that this ID numbering scheme not only avoids erroneous decombining at a switch, but also detects them at the switch.

It should be noted here that the designer is free to choose the ID assignment to the switches, as long as the above guidelines are followed. Also error detection codes, as discussed earlier, can be used to detect errors in these ID fields.

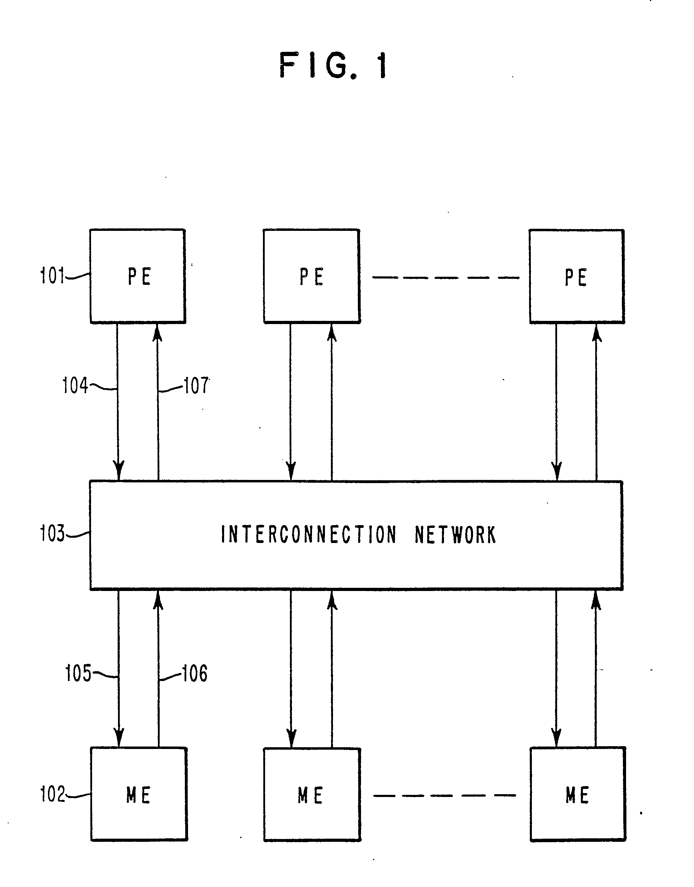

To facilitate an understanding of this invention, a parallel processor system can be seen to contain three distinct elements: processor element (PE) 101, memory element (ME) 102 and an interconnection network 103 (see FIG. 1). A parallel processor system consists of several processors and memory elements that are connected to each other via the interconnection network. One or more networks can be used for this interconnection. In order to communicate across this network, a PE 101 sends on cable 104 a message to the network 103. The network routes this message to the required ME. The memory element 102 receives this message over cable 105, processes it and sends a reply message over cable 106 to the requesting network 103. The network then routes this message to the required PE. The PE receives this message on cable 107 and processes it. It should be noted that a network can also be used to communicate between the PEs.

The details of the PE and ME are not relevant to this invention and are accordingly not described in detail. For a more complete description of the general characteristics of such Multi Processor systems, reference is again made to the example (1 and 3).

Multistage interconnection networks (MINs) are very often used by parallel processing systems. A generic example of a MIN is shown in FIG. 2. FIG. 2 shows an 8x8 size MIN, it connects 8 PEs to 8 MEs. It is readily possible to design MINs of other sizes. MINs use several stages of switches 203 that are interconnected in some specified order via links such as 204 and 205. The PEs and MEs are also interfaced to the MIN such as by links 201, 202, 206 and 207.

The links 201, 202, 204, 205, 206 and 207 of the MIN are busses that are used to communicate messages. Depending on the implementation of the MIN, these links can be unidirectional or bidirectional. The details of the links and the protocol used to communicate across them are not specifically disclosed as their details would be well known to those skilled in the art of this invention. An example of a link protocol is given in reference (6).

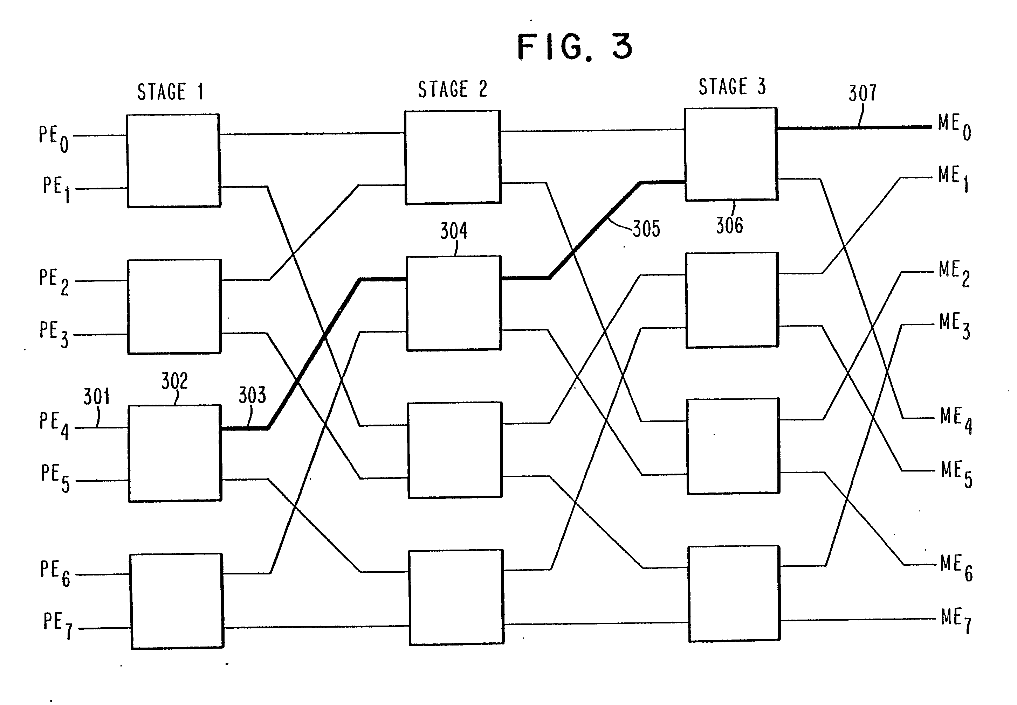

The switch 203 of the MIN is basically responsible for routing the messages it receives on its input links 201 and 202 to its output links 204 and 205. For the example of FIG. 3 the path, taken by messages proceeding from PE4 to ME0 is shown. PE4 sends its messages to switch 302 via link 301. The switch 302 routes this message and sends it across its output link 303 to switch 304. The switch 304 routes this message across its output link 305 to switch 306. The switch 306 then routes this message across link 307 to ME0. A similar communication path is constructed to route the reply from ME0 to PE4. Note that these communication paths are constructed dynamically by the switches for each message, as is well known in the art. Also, after each message has been sent across a switch, the switch disconnects this path and processes the next message if any). A MIN can route many messages concurrently through it. The MIN example of FIG. 2 uses a 2x2 size switch (i.e. the switch has 2 input and 2 output links). It is also well known to use other size switches for MINs. The details of the switch are not relevant to the invention. Suitable switches are disclosed and discussed in references (6, 7 and 8).

The way in which the links (201, 202 and 204 to 207 connect the switches of the link is called the topology of the MIN. FIG. 2 shows one such topology. Other topologies can also be used. The details of a MIN's particular topology are, similarly, not relevant to the present invention.

Besides routing messages, the switches of the MIN can be designed to process the messages. One such processing function that can be designed is called combining. MIN networks that support combining are called Combining Networks. A suitable combining network will now be described.

An example of the combining function and an example of combining in combining networks will first be described. Then the organization of such a network will be set forth. Following this the organization of the combining network switch is described.

The main reason for combining is to reduce the message traffic seen by the MEs, as described previously (1 and 4). This message traffic is reduced by generating one request for a group of similar requests to the same address in the ME. For example, if 2 load (LD) operations for the same address A are requested by the PEs of a parallel processor system, then using the combining function the system sends only one LD request to the ME hosting address A. (Note two LD requests to the memory are now reduced to one LD request, thus reducing the traffic to the ME by 50% in this case). The ME executes this request and generates a reply message. This reply message is decombined by the system to generate the reply message for the two LD requests that were originally requested by the PEs. The resulting reply messages are then sent to the PEs. This example used load memory operations to explain combining, but combining can be done for many other types of memory operations too. A number of such combinable operations are suggested in (3, 4 and 8).

In combining networks such combining operations are done by the switches of the network. FIG. 6 shows how the combining example explained above is executed by a combining network. An 8x8 MIN, using 2x2 switches, as shown in FIG. 2, is used as an example of such a network. Combining can be supported in MIN networks of other sizes, implemented using switches of other sizes. For the combining network example described here, the communication path from the PEs to the MEs is referred to as the Forward path, and the communication path from the MEs to the PEs as the Reverse path. In the FIG. 6 example, PEs 601 and 602 generate the LD requests (<LDA>) and send them to switches 605 and 606 across the links 603 and 604, respectively. In this example, no combinable messages were detected by switches 605 and 606. Therefore, these switches 605 and 606 only route these LD request messages across links 607 and 608 respectively, to the required switch 609 in stage-2. It is assumed here that these LD messages arrive at switch 609 in time to be combined. It is not necessary for messages to arrive simultaneously, in order to be combined. Switch 609 detects that these messages can be combined and therefore combines them. The resulting single request LD message (<LDA>) is then sent to across link 610 to the next stage's switch 611. No combinable message is detected by switch 611, therefore it routes the LD message across link 612, to the required ME 613.

The ME 613 executes the LD operation from location A in its memory. Since this memory location has the value 5 stored in it, this value is read. The ME 613 generates the reply message (<reply 5>) and sends it across link 612 to switch 611.

Assuming no errors have taken place in the system, the switch 611 checks to see if it had combined the request message for this reply message. Since it did not, it only routes the reply message and sends it across link 610 to switch 609. Switch 609 recognizes that it had combined two messages into one and that the reply message received is for this resulting combined message. Therefore, it decombines the reply message, that is it generates the required reply messages for the LD messages it had combined and sends these two reply messages across links 607 and 608. The messages are received by switches 605 and 606 respectively. Since these switches 605 and 606 did not combine the request messages for these reply messages, they only route messages across links 603 and 604 to the required PEs 601 and 602 respectively.

It is possible that errors can take place in such a system and affect the routing of messages. These errors can sometimes result in erroneous decombining. For example, in FIG. 6, assume an error occurred in the routing logic of switch 611 when it is routing the reply message. Then it is possible that the switch erroneously routes the reply message across link 614, instead of link 610. (This is illustrated by the dashed lines). The reply message is now received by switch 615, instead of 609. If only the stage number is used to identify if a switch needs to decombine the reply message, as is the case in the known prior art, then switch 615 will decombine this message. This is because 609 combined the message in the Forward path, and since this switch is in stage-2, the resulting combined request message was tagged as combined in the second stage of the network. In the Reverse path both these switches 609 and 615 are also in stage-2, therefore the erroneously routed message can be decombined erroneously by switch 615. The resulting reply message is routed across links 616 and 617 to switches 618 and 619 respectively. These switches 618 and 619 then route these reply messages across links 620 and 621 to PEs 622 and 623 respectively.

Combining networks are MIN networks that are logically organized as shown in FIG. 4. They consist of two MINs, a Forward network 402 and a Reverse network 405. The PEs send their request messages to the Forward network 402 across the network's input links 401. The Forward network combines these request messages as needed and routes them to the MEs across its output links 403. The MEs execute the operations requested by the "request" messages and then generate "reply" messages. These replies are then sent to the Reverse network 405 across the network's input links 404. If request messages were combined by the Forward network 402, then the resulting reply messages must, of course, be decombined by the Reverse network 405. The resulting decombined messages, or the single reply message (if not decombined), are delivered to the required PEs across the Reverse network's 405 output links 406.

The physical organization of these combining networks is dependent on the implementation. By this it is meant that it is possible to design the Forward and Reverse networks as two separate MINs. Alternatively, it may be designed as one physical MIN, whose switches support these Forward and Reverse network operations, while the links support bidirectional communication. In either implementation, the combining operations need a switch in the Forward network to communicate with its companion switch in the Reverse network. Similarly communication also is needed between the Reverse and the Forward networks. This communication is done across the inter-network set of links 407. This communication between the Forward and Reverse network switches is needed to communicate necessary decombining information between these switches (6, 7 and 8).

It should be noted that combining networks require that the combined request messages and their reply messages should be routed via the same communication path in these Forward and Reverse networks. That is the reply message of a combined request message should always be routed via the switches of the Reverse network, that are the companions of the switches in the Forward network via which the request message was routed.

The combining network switch logically consists of a forward switch 504 and a companion reverse switch 509, as shown in FIG. 5. Again, for a general description of such switching networks and switches, reference is made to (6, 7 and 8). The Forward network switch 504 receives the request messages generated by the PEs across its input links 501 and 502. The forward switch 504 determines when messages are combinable and combines these messages. If a message is combined, then the forward switch 504 sends some decombining information to its companion reverse switch 509 across link 513. It is possible for the companion reverse switch 509 to send some flow control or other control information to the forward switch 504 too. This information is exchanged across link 514. (It should be noted that links like 513 and 514 make up the inter network set of links 407 in FIG. 4). Once combining is done, a single request message is generated by the forward switch 504. This request message is tagged with the forward switch's ID 503 to indicate where this message was combined. It should be noted that the forward switch's ID 503 is the same as the reverse switch's ID 510. The forward switch 504 then routes the resulting request message to a switch in the next stage, or to a ME if it is in the last switch level (closest to memory), across one of its output links 505 or 506. If combining is not done, then the forward switch 504 does not tag the request message. The forward switch 504 only routes the request message to a switch in the next stage, or to a ME, across one of its output links 505 or 506.

The Reverse network switch 509 receives the reply messages generated by the MEs across its input links 507 and 508. The reverse switch 509 determines when messages are to be decombined. A message is decombined if the message's ID matches the reverse switch's ID 510. If a reply message is decombined, the reverse switch 509 generates the required reply messages and sends them across the required output links 511 and/or 512. If a reply message is not decombined, then the reverse switch sends the reply message it received across the required output link 511 or 512.

The physical organization of the combining switch depends on the implementation. That is it is possible for the forward switch 504 and the reverse switch 509 to be designed as separated modules (chips or cards), or they can be designed to be one module. Further details of the design or implementation of these switches is not relevant to this invention and would be obvious to one skilled in the art (6, 7 and 8).

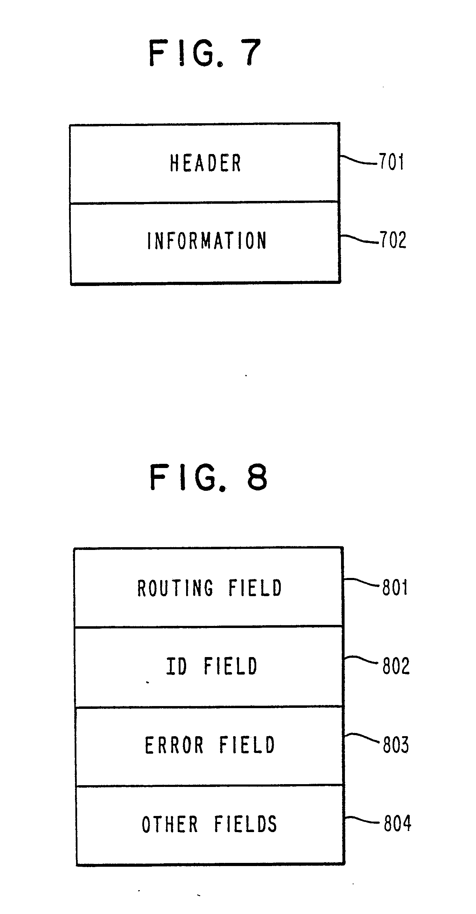

The messages that are routed by MINs are organized as shown in FIG. 7. Each message can be logically partitioned into a header portion 701 and an information portion 702. The size of each of these portions and the message itself is not specific to the present invention. The use and content of such messages are well known in the art. ·

The structure of a message of the combining network is shown in FIG. 7. This message's header portion is partitioned into the following fields (see FIG. 8):

Routing field (801): This field stores the information needed by the Forward and Reverse networks to route the request and resulting reply messages.

ID field (802): If a message is combined, then this field in the request message is initialized by the forward switch 504 (see FIG. 5) with its ID 503.

Error field (803): This field is set by the forward switch 504, the ME and the reverse switch 509, whenever they detect an error in either receiving or processing the message.

Other fields (804): This field is used to store any other information that may be needed by the design of the combining network being used. Details and the use of this field are not relevant to this invention.

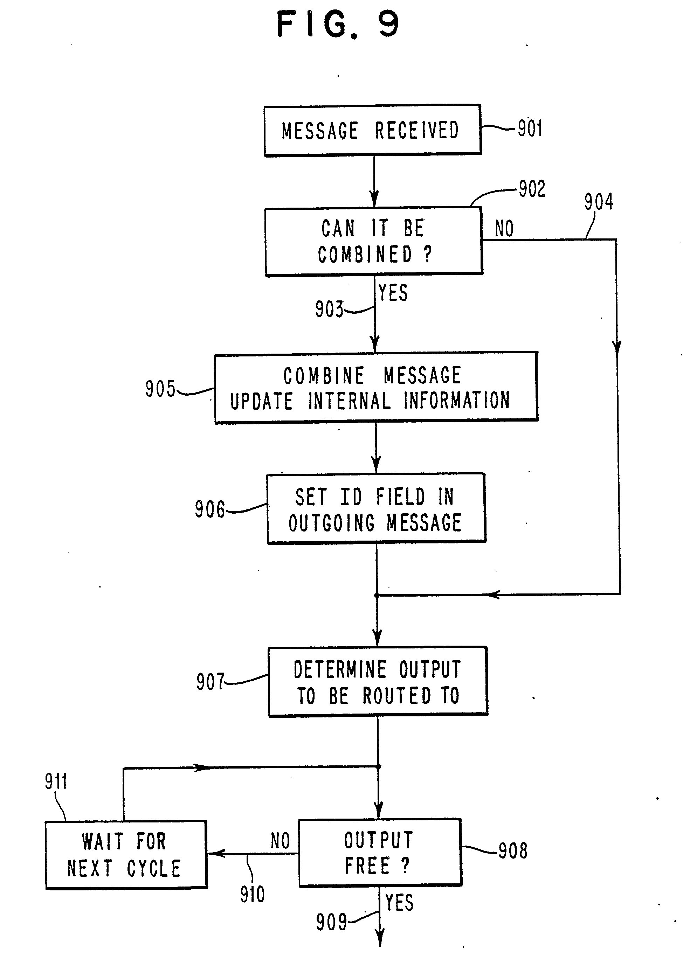

An overview of the operation of the combining network's forward switch 504 (see FIG. 5) is shown in FIG. 9. It should be noted that only the control information relevant to the invention is shown in FIG. 9. The request message is received by the forward switch 504 in block 901 and is checked by block 902 to determine if it is combinable with other messages that may be buffered within the switch 504 and/or those that are received on its other input links. If the message is combinable (903) as determined in block 902, then combining is done in block 905. If the message is not combinable (904) block 902 routes the message via block 907 to the output links of the switch. If a message is combined in block 905, then the message's ID field 802 (see FIG. 8) is initialized (block 906) with the forward switch 504's ID 503. In order to route a request message, the required output link across which the message must be routed is determined by block 907 via the routing field in the message header (FIG. 8) and then this output link 909 is checked by block 908 to determine if it is free or not. If this output link is free (909), that is, it is not being used to send another message, then this message is sent across this output link. If this output link is busy 910 indicates that it is being used to send another message, in which case the present message is not sent. In this case the switch waits for the next switch cycle (i.e., a message transmission time) in block 911 and then attempts to send this message again via block 908.

As is well understood by those skilled in the art, such combining networks must store, when appropriate, a great deal of internal information about each combined message at each switch. Thus, each set of messages combined at a switch results in a set of data which must be stored therein. This would normally include at least routing information of the packets that are combined so that, when the combined message is returned from memory, it can be decombined and the parts sent down the proper paths to the originating processors. This and other data is stored at each switch whenever combining is done by the switch and must be entered, altered or deleted when a new message is received from a processor and combined, or data is returned from memory and must be decombined. This data at each switch is updated, etc., in the blocks 905 and 1005 as indicated by the "update internal information" label in each of these blocks. (References (6, 7 and 8) de scribe and discuss the use and function of such internal information in great detail.)

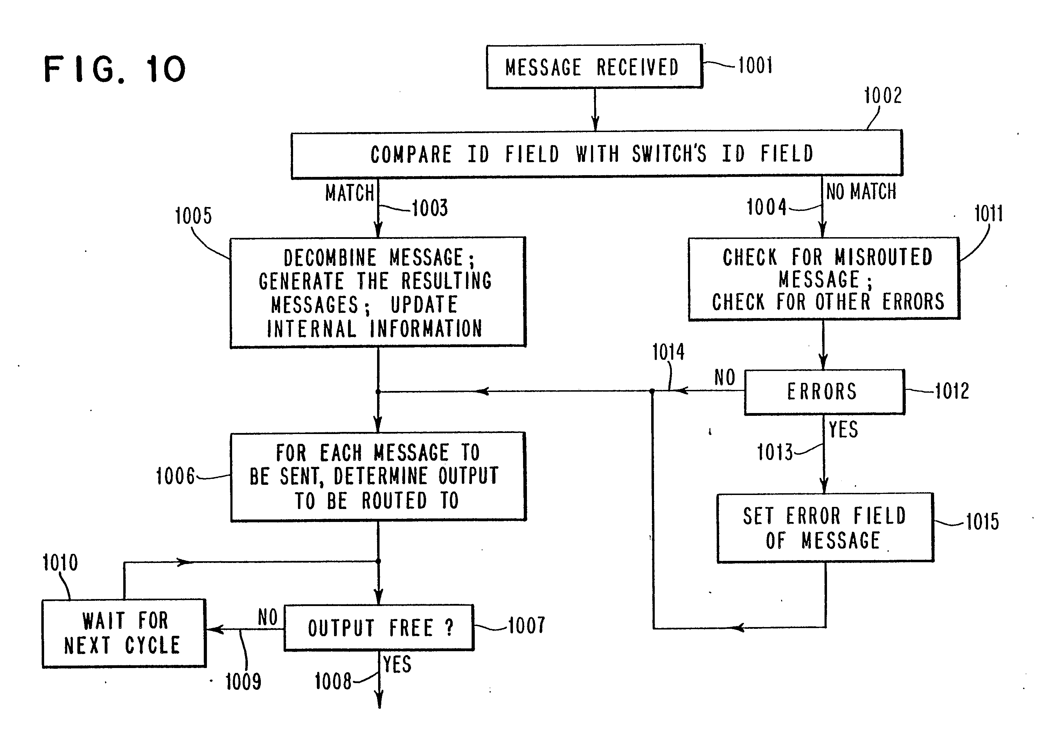

An overview of the operation of the combining network's reverse switch 509 (see FIG. 5) is shown in FIG. 10. It should be noted that only the control information relevant to the invention is shown in FIG. 10. The ID field 802 (see FIG. 8) of the message received in block 1001 is compared in block 1002 with the switch 509's ID field 510. If a match is found, line 1003 is active and the reply message is decombined and the required reply messages are generated in block 1005. The resulting reply messages are then routed 1006. If the IDs do not match 1004, then the reply message received is checked for errors 1011 and 1012.

If errors are detected 1013, then the reply message's Error field 803 is set 1015 and then the message is routed by block 1006. This Error field 803 is not set if no errors are detected 1014. In order to route a reply message, the required output link across which the message must be routed is determined in block 1006 and then this output link is checked in block 1007 to determine if it is free or not. If this output link is free 1008, that is not being used to send another message, this message is sent across this output link. If this output link is busy 1009, that is being used to send another message, then the message is not sent. In this case 1009 the switch waits at block 1010 for the next switch cycle (i.e. message transmission time) and then attempts in block 1007 to send this message again.

The first method of the invention assigns unique IDs 1113 to each combining switch. Both the forward switch 504 and reverse switch 509 (see FIG. 5) IDs 503 and 510 are assigned this unique ID 1113. That is the forward 504 and reverse 509 switches are assigned the same ID. This scheme requires that one unique ID "NOC" be reserved to indicate that a message is not combined by any switch. The PEs set their request message ID fields to NOC. The forward switches alter this ID (i.e. NOC) only if they combine messages. The reverse switches recognize this ID (i.e. NOC) to indicate that the reply message is for an uncombined request message.

An example of assigning these IDs is shown in FIG. 11. For simplicity only switches 1101 to 1112 are shown in FIG. 11. These switches 1101-1112 are assigned unique IDs 1 through 12 respectively. The NOC ID value chosen for this example is 0.

The second method envisioned by the present invention assigns unique IDs 1215 to each combining switch. Both the forward switch 504 and reverse switch 509 (see FIG. 5) IDs 503 and 510 are assigned this unique ID 1215. That is the forward 504 and reverse 509 switches are assigned the same ID. This scheme requires that one unique ID "NOC" be reserved to indicate that a message is not combined by any switch. The PEs set their request message ID fields to NOC. The forward switches alter this ID (i.e. NOC) only if they combine messages. The reverse switches recognize this ID (i.e. NOC) to indicate that the reply message is for an uncombined request message.

Each ID assigned by this scheme is constructed by concatenating two fields 1213 and 1214 (see FIG. 12). The first field 1213 is the switch's stage number. For example, this field 1213 is set to one for switch 1201 and two for switch 1202. The second field 1214 is the unique number of the switch in its stage. For example, this field 1214 is set to one for switch 1201 and two for switch 1204.

An example of assigning these IDs is shown in FIG. 12. For simplicity only the switches 1201 to 1212 are shown in FIG. 12. These switches 1201-1212 are assigned unique IDs 11, 21, 31, 12, 22, 32, 13, 23, 33, 14, 24, and 34 respectively. The NOC ID value chosen for this example is 00.

All of the hardware necessary to identify when two messages received at a given switch node are susceptible of being combined are well known in the art and are discussed in both the NYU Ultracomputer articles (6 and 7) and the RP3 article (8) referenced previously. The hardware required for placing any given level or switch node ID in a message header would be obvious to those skilled in the art as well as the means for comparing these fields with local ID fields at a given switch node when messages are being returned. The specific hardware and organization utilized to effect these obvious functions could take many forms and are deemed to be obvious to skilled circuit designers. To show the hardware details of such circuitry would merely serve to obfuscate the present invention and has accordingly not been included herein.

The invention thus resides in the architectural specification and procedures set forth in the fIGS. 9 and 10 which are implemented at each switch node of a Combining/Decombining network in the Forward and Reverse network switches, respectively. Thus by adding a small amount of additional switch/level ID information in the message header in the forward direction and a small amount of additional hardware in the reverse network, varying the relevant header fields and also performing certain error checking operations, a significantly improved interconnection network architecture is achieved.

Also, although the present invention has been set forth and described indicating that messages can be combined at only one switch node and level, it is quite conceivable that with more sophisticated systems: 1) more than two messages can be combined at a given switch if n-way switches are used; and 2) messages could be combined at each level of the network assuming the combining criteria were met. Obviously appropriate hardware would be necessary to do the testing and combining, and adequate headers would have to be provided to contain the requisite IDs, error codes, etc. Also, appropriate logic and storage would be necessary in each switch to retain the necessary routing information and all of the data necessary to decombine and route the decombined messages to their proper source whether to other preceding switch nodes or to the originating processors. However, this is well known in the art, as exemplified by the NYU Combining Switch articles (6 and 7), and the RP3 Combining Switch reference (8), for example.

## Claims

1. A method for performing message combining/decombining in multistage interconnection networks (MINs) which comprises:

1) assigning a unique identification (ID) number to every switch in the network;

2) analyzing every message to be transmitted to the system through each switch from a first source to determine if it can be combined with another message from another source; and if so, performing a combining operation, and

3) appending the unique ID number of the switch performing the combining operation tc the message header,

4) passing the modified message to the next point in the network, and repeating steps 1-3 until the message reaches its destination in memory;

5) placing a response message on the reverse path of said interconnection network back to a requesting processor and appending any switch IDs to the response message which were contained in the forward message;

6) analyzing said response message at each switch through which said message is routed to determine if the message needs to be decombined at that switch;

7) said analyzing step including comparing the switch's ID field with the decombining ID field included in the header; if any, and

8) if the ID'S match, decombining the message and forwarding the separate messages to the next switch node or to the requesting processors.

2. A method for performing message combining/decombining in a multistage interconnection network as set forth in claim 1 including returning the message without decombining, when the ID fields do not match, to a single preceding stage (or processor) in the MIN.

3. A method operable in a message combining/decombining multistage interconnection network system as set forth in claim 1, including setting the switch ID field in the message header to an initial no-combination configuration (NOC) when a message is presented to the MIN, and resetting said NOC field to a particular switch's ID only if a combination operation takes place; and bypassing the decombination function at any switch which a message traverses in the reverse direction if the ID field which would be associated with that switch is set to NOC.

4. A method operable in a message combining/decombining multistage interconnection network as set forth in claim 3 wherein the step of inserting a unique switch ID field in a combined message level includes first concatenating the unique switch ID field with a unique ID field identifying the level of the switch in the MIN, and inserting the concatenated ID in the message header.

5. A method operable in a message combining/decombining multistage interconnection network as set forth in claim 3, including generating and inserting an error detection code field generated for the unique switch ID field in the message header, together with the ID field, and utilizing the error detection code field to verify the ID carried by a message traversing the MIN in the reverse direction before performing any decombination operation.

6. In a combining/decombining multistage interconnection network (MIN) for communicating between the processors of a multiprocessor computer system and a memory system comprising a plurality of separate memory modules, wherein said MIN comprises a plurality of individual switch elements organized into a plurality of multi-switch levels, a switch in any level being connected only to switches in adjacent levels, each said switch including means for determining if two messages can be combined and, if so, effecting a combining operation and storing all internal data necessary to effect subsequent decombining when the combined message is returned to that switch, the improvement which comprises a method operable in the MIN switch architecture of each switch comprising:

1) appending a unique ID to the combined message's header, when it is "combined", uniquely and unambiguously identifying the switch which effected the combining operation;

2) checking the IDs of any "combined" message returned to the switch to see if the ID of this message and the switch ID match and, if so;

3) decombining the message and routing the individual decombined messages in accordance with data stored in the switch and if not;

4) inhibiting any decombining operation and routing the message to the next switch node in the network or to a requesting processor and;

5) setting an error/field in the message if an ID transmission and/or a routing error is detected.

7. A method operable in a MIN switch architecture as set forth in claim 6 further including appending a unique level ID to the message header when a combined message is formed together with the unique switch ID and comparing both the switch ID and the level ID when a "combined" message is received on the return path of the MIN and flagging a routing error if the level IDs match but the switch IDs don't.

8. A method operable in a MIN switch architecture as set forth in claim 7 including initially setting a unique "no-combined" field (NOC) in all message ID fields and retaining the NOC configuration until a combining operation occurs and bypassing any decombination procedure when any message having its ID field set to NOC is returned to any switch.

9. A method for performing message combining/decombining in multistage interconnection networks (MINs) which comprises:

1) assigning a unique identification (ID) number to every switch in the network;

2) analyzing every message to be transmitted to the system through each switch from a first source to determine if it can be combined with another message from another source; and if so, performing a combining operation, and

3) appending the unique ID number of the switch performing the combining operation to the message header,

4) passing the so combined message to the next point in the network, and repeating steps 1-3 until the message reaches its destination in memory;

5) placing a response message from memory on the reverse path of the MIN and appending all header information from the outgoing message to the response message;

6) comparing the response message's ID with the ID of the receiving switch;

7) if IDs match in step 6, decombining the messages and

8) routing the decombined messages to the processors via internal information stored in the switch;

9) if the IDs compared in step do 6 do not match, checking to see if a message is routed incorrectly, or there is an error in the ID based on an error detection code appended to the ID and;

10) if any error is detected, appending an error signal to the non-decombined message's "error" field before it is sent out to the next swtich level or requesting processor.

10. A method operable in a message combining/decombining multistage interconnection network system as set forth in claim 9, including setting the switch ID field in the message header to an initial no-combination configuration (NOC) when a message is presented to the MIN, and resetting said NOC field to a particular switch's ID only if a combination operation takes place; and bypassing the decombination function at any switch which a message traverses in the reverse direction if the ID field which would be associated with that switch is set to NOC.

11. A method operable in a message combining/decombining multistage interconnection network as set forth in claim 10 wherein the step of inserting a unique ID field in a combined message level includes first concatenating a unique switch ID field with a unique ID field identifying the level of the switch in the MIN, and inserting the concatenated ID in the message header.

# FIG. 1

EP 0 365 745 A2

# FIG. 2

STAGE 1          STAGE 2          STAGE 3

PE$_0$ ——— ME$_0$

PE$_1$ ——— ME$_1$

201   203   204

PE$_2$ ——— ME$_2$

206

PE$_3$ ——— ME$_3$

202   205   207

PE$_4$ ——— ME$_4$

PE$_5$ ——— ME$_5$

PE$_6$ ——— ME$_6$

PE$_7$ ——— ME$_7$

LINK

SWITCH

# FIG. 3

# FIG. 4

# FIG. 5

IBM — YO 986 111

EP 0 365 745 A2

# FIG. 6

# FIG. 7

| | |
|---|---|
| HEADER | ─701 |
| INFORMATION | ─702 |

# FIG. 8

| | |
|---|---|
| ROUTING FIELD | ─801 |
| ID FIELD | ─802 |
| ERROR FIELD | ─803 |
| OTHER FIELDS | ─804 |

# FIG. 9

MESSAGE RECEIVED — 901

CAN IT BE COMBINED ? — 902      NO — 904

903 — YES

905 — COMBINE MESSAGE UPDATE INTERNAL INFORMATION

906 — SET ID FIELD IN OUTGOING MESSAGE

907 — DETERMINE OUTPUT TO BE ROUTED TO

911 — WAIT FOR NEXT CYCLE      NO      OUTPUT FREE ? — 908

910

909 — YES

IBM — YO 986 111

# FIG. 10

```
                          ┌─────────────────────┐
                          │  MESSAGE RECEIVED   │──── 1001
                          └─────────────────────┘
                                    │
                                    ▼
        ┌──────────────────────────────────────────────────────────┐ ──── 1002
        │      COMPARE ID FIELD WITH SWITCH'S ID FIELD             │
        └──────────────────────────────────────────────────────────┘
              │ MATCH                              │ NO MATCH
         1005 │      ── 1003              1004 ──  │        ── 1011
              ▼                                    ▼
   ┌────────────────────────┐          ┌────────────────────────┐
   │   DECOMBINE MESSAGE;   │          │   CHECK FOR MISROUTED  │
   │  GENERATE THE RESULTING│          │        MESSAGE;        │
   │    MESSAGES;  UPDATE   │          │  CHECK FOR OTHER ERRORS│
   │  INTERNAL INFORMATION  │          └────────────────────────┘
   └────────────────────────┘                     │
              │                      1014          ▼
              │                        NO    ┌──────────┐
              │◄──────────────────────────── │  ERRORS  │──── 1012
              ▼                              └──────────┘
   ┌────────────────────────┐                     │ YES
   │   FOR EACH MESSAGE TO   │              1013── │
1006──│ BE SENT, DETERMINE OUTPUT│                 ▼
   │    TO BE ROUTED TO     │          ┌────────────────────────┐
   └────────────────────────┘          │    SET ERROR FIELD     │──── 1015
              │                         │      OF MESSAGE        │
              ▼                         └────────────────────────┘
   1010                                            │
    ┌──────────────┐    NO   ┌──────────────┐      │
    │   WAIT FOR   │◄────────│ OUTPUT FREE ?│──── 1007
    │  NEXT CYCLE  │         └──────────────┘
    └──────────────┘    │         │ YES
         · 1009      1008──       ▼
```

EP 0 365 745 A2

IBM — YO 986 111

# FIG. 11

EP 0 365 745 A2

|  | STAGE 1 | STAGE 2 | STAGE 3 |  |
|--|---------|---------|---------|--|
| | 1 — 1113 | 2 | 3 | ROW 0 |
| | 1101 | 1102 | 1103 | |
| | 4 | 5 | 6 | ROW 1 |
| | 1104 | 1105 | 1106 | |
| | 7 | 8 | 9 | ROW 2 |
| | 1107 | 1108 | 1109 | |
| | 10 | 11 | 12 | ROW 3 |
| | 1110 | 1111 | 1112 | |

EP 0 365 745 A2

FIG. 12

| STAGE 1 | STAGE 2 | STAGE 3 | |
|---------|---------|---------|---|
| 1213 — [ 1 ¦ 1' ] — 1214  1201  1215 | 21  1202 | 31  1203 | ROW 1 |
| 12  1204 | 22  1205 | 32  1206 | ROW 2 |
| 13  1207 | 23  1208 | 33  1209 | ROW 3 |
| 14  1210 | 24  1211 | 34  1212 | ROW 4 |